# EUROPÄISCHE PATENTSCHRIFT

(11) **EP 3 795 478 B1**
(45) Veröffentlichungstag und Bekanntmachung des Hinweises auf die Patenterteilung: **04.01.2023**
(21) Anmeldenummer: 20197020.9
(22) Anmeldetag: 18.09.2020
(51) Int. Cl.: B64F 1/315, B64D 9/00

(54) **HORIZONTALVERSCHIEBUNG FÜR FLUGZEUGTREPPE**
HORIZONTAL DISPLACEMENT FOR AIRCRAFT STAIRS
DÉPLACEMENT HORIZONTAL POUR L'ESCALIER D'AVION

(30) Priorität: 19.09.2019 EP 19198321
(43) Veröffentlichungstag der Anmeldung: 24.03.2021
(73) Patentinhaber: Krämer GmbH, 72555 Metzingen (DE)
(72) Erfinder: Losch, Max, 72820 Sonnenbühl-Genkingen (DE)
(74) Vertreter: Jeck, Anton

(56) Entgegenhaltungen:
- EP-A1- 3 511 251
- CN-U- 206 914 670
- DE-B- 1 208 197
- GB-A- 1 271 941
- US-A- 3 664 456

## Beschreibung

Die Erfindung betrifft eine Flugzeugtreppe nach dem Oberbegriff des Anspruchs 1.

Insbesondere durch das Be- und Entladen von Flugzeugen verändert sich neben der Höhe eines Flugzeugs, insbesondere des Flugzeugsrumpfs, auch sein Abstand zu einer angestellten Flugzeugtreppe, da der Flugzeugrumpf in der Regel nach außen eine konvexe Formgebung aufweist. Bei der Auf und Ab Bewegung des Flugzeugrumpfs wird daher auch ein Abstand zu einer ortsfest parkenden Flugzeugtreppe verringert oder vergrößert. Die kann bei falscher Bedienung der Flugzeugtreppe grundsätzlich zu Beschädigungen der Außenhaut des Flugzeugs durch Kollision mit der Treppe führen oder für Passagiere gefährliche Lücken zwischen Flugzeugrumpf und Kanzel der Flugzeugtreppe zur Folge haben. Bei einer angestellten Flugzeugtreppe muss ein Passagier diese Veränderung entweder überwinden oder die Flugzeugtreppe, insbesondere die Plattform (Kanzel) der Flugzeugtreppe, über welche die Passagiere die Luke des Flugzeugs erreichen, muss dem Abstand nach angepasst, also verfahren werden. Insbesondere bei großen Flugzeugen kann die Damit verbundene seitliche Veränderung mehre Dezimeter betragen, weswegen mit zunehmendem Abstand zwischen Flugzeugtreppe und Einstiegsluke in dem Flugzeugrumpf ein steigendes Sicherheitsrisiko für die Passagiere entsteht.

Des Weiteren kann das Anpassen des Abstands zwischen Flugzeugtreppe und Flugzeugrumpf im Extremfall zu einer unerwünschten Unterbrechung beim Einstieg oder Ausstieg für eine Anpassung der Flugzeugtreppe haben.

Dies erfordert jedoch intensiven Einsatz von Bodenpersonal und die ständige Aufmerksamkeit des selbigen, wann die Flugzeugtreppe erneut an den Flugzeugrumpf beziehungsweise an die Ausstiegshöhe an der Luke anzupassen ist.

Aus der US 3, 664,456 A ist eine 2-teilige Flugzeugtreppe bekannt, bei welcher die Stufen der Flugzeugtreppe teleskopartig ausfahrbar sind und die Kanzel zweiteilig ausgebildet ist, wobei ein Teil der Kanzel horizontal beweglich gegenüber dem zweiten Teil der Kanzel gelagert ist.

Die EP 3 511 251 A1 beschreibt eine Flugzeugtreppe mit einer Sensoren Anordnung zur Ausrichtung der Flugzeugtreppe gegenüber einem Flugzeugrumpf.

Aus der GB 1 271 941 ist eine teleskopartig ausfahrbare Flugzeugtreppe bekannt, welche in einem Fixpunkt am Rahmen gelenkig mit diesem verbunden ist.

Die DE 12 08 197 B beschreibt ebenfalls eine teleskopartig ausfahrbare Flugzeugtreppe, welche zweiteilig ausgebildet ist.

Aus der CN 206 914 670 U ist eine Flugzeugtreppe bekannt, deren Kanzel gegenüber den Flugzeugtreppenstufen beweglich gelagert ist.

Ausgehend von dem obigen Stand der Technik, liegt der Erfindung die Aufgabe zugrunde, hier Abhilfe zu schaffen und die gattungsgemäße Flugzeugtreppe ohne unangemessenen konstruktiven Aufwand so weiterzubilden, dass eine Anpassung des Abstands auch im laufenden Betrieb erfolgen kann.

Die gestellte Aufgabe wird erfindungsgemäß durch die Merkmale des Anspruchs 1 gelöst.

Erfindungsgemäß ist eine Verstelleinrichtung vorgesehen, mittels welcher die Kanzel als Ganzes gegenüber zumindest einem Teil des Rahmens bei gleichbleibender Höhe der Kanzel gemeinsam mit dem Treppenaufgang horizontal verschiebbar gelagert ist.

Die Bestimmung der Veränderung einer Höhe kann beispielsweise durch lotrechte Messung am Flugzeugrumpf und die dabei ermittelte Veränderung der Distanz zwischen Distanzmesseinrichtung und Flugzeugrumpf oder eine Bestimmung der absoluten Distanz zwischen den selbigen bestimmt werden.

Die Bestimmung der absoluten Höhe des Flugzeugsrumpfes von einer Bodenebene kann ebenfalls durch eine lotrechte Messung am Flugzeugrumpf erfolgen, wobei der Abstand zwischen Distanzmesseinrichtung und Bodenebene in der Steuereinrichtung hinterlegt sein kann. Dies kann einer exakten Bestimmung der Höhe des Flugzeugs vom Boden zuträglich sein.

Die Bestimmung der Veränderung der Höhe kann auch durch eine Messung am Flugzeugrumpf mittels einer schrägen Messung erfolgen, also einer Messung welche nicht lotrecht erfolgt. Dabei kann die Distanzmesseinrichtung mit ihrer Messeinrichtung und der Bodenebene einen Winkel α einschließen, welcher von einem 90° Winkel, also einem lotrechten Winkel abweichen kann. Da der Winkel α vorbestimmt sein kann und bekannt ist, die Distanz zwischen der Distanzmesseinrichtung und dem Flugzeugrumpf bestimmbar ist und der Abstand der Distanzmesseinrichtung von einer Bodenebene ebenfalls bekannt ist, kann eine Höhe vom gemessenen Punkt am Flugzeugrumpf zur Bodenebene bestimmt werden.

Es ist ebenfalls möglich den absoluten Abstand des Flugzeugrumpfes von einer Bodenebene mittels dieser Messung mit dem Winkel α zu bestimmen. Die äußere Form eines Flugzeugsrumpfes weist eine standardisierte Kontur auf, welche in Abhängigkeit von dem Flugzeugtyp demselben geometrischen Formenverlauf folgt. In der Steuereinrichtung können Informationen über die einzelnen Flugzeugtypen und ihre äußere Formgebung hinterlegt sein. Soweit der entsprechende Flugzeugtyp der Steuereinrichtung mitgeteilt wird, beziehungsweise dieser aus einer Datenbank ausgewählt wird, kann die Steuerungseinrichtung bei der Bestimmung des absoluten Abstands des Flugzeugrumpfs von einer Bodenebene die Höhendifferenz zwischen dem Messpunkt und dem tiefsten Punkt des Flugzeugrumpf, welcher für den absoluten Abstand des Flugzeugrumpfs im Messbereich von der Bodenebene maßgeblich ist, berücksichtigen. Die bei einem gegebenen Messungswinkel α vermessene Position an einem Flugzeug und dessen Abstand zu einem tiefsten Punkt des Flugzeugrumpfs im Messungsbereich, vorzugsweise im Messungsquerschnitt durch das Flugzeug (einen Querschnitt am Messungspunkt quer zur Längsachse des Flugzeugs) kann in Abhängigkeit vom Flugzeugtyp und dessen hinterlegter äußerer Geometrie ebenfalls bestimmbar sein.

Eine Bestimmung der Höhe eines gemessenen Punkts an der Außenhülle des Flugzeugs, beispielsweise eine Höhe einer Ausstiegsluke, insbesondere dem unteren Rand der Ausstiegsluke kann basierend auf dem Messungswinkel und der äußeren Geometrie des Flugzeugs ebenfalls bestimmbar sein. Im angestellten Zustand kann die Treppe grundsätzlich einen festgelegten Abstand zum Flugzeug aufweisen. Dadurch kann die Ausrichtung der Distanzmesseinrichtung gegenüber dem Flugzeug vordefiniert sein. Basierend auf der äußeren Flugzeuggeometrie und der Ausrichtung der Distanzmesseinrichtung gegenüber dem Flugzeug kann gemessene Distanz zwischen Distanzmesseinrichtung und Flugzeugaußenhaut direkt in eine Höhe des Flugzeugs gegenüber einer Bodenebene umgerechnet werden. Diese Information kann verwendet werden um eine initiale Höheneinstellung der Flugzeugtreppe zu bewirken. Im Laufe des Be- und Entladens kann die Distanzmesseinrichtung einen variierenden Abstand zu der Flugzeugaußenhaut feststellen, wobei diese Distanzänderung vorzugsweise basierend auf der hinterlegten Geometrie in eine Änderung der Höhe des Flugzeugs von einer Bodenebene umgerechnet werden kann.

Da bei einem bestimmten Flugzeugtyp aufgrund des festgelegten Winkels α die Abstandsbestimmung grundsätzlich immer an derselben Stelle erfolgt, da sich auch die Flugzeugluke bei diesem Flugzeugtyp grundsätzlich immer an derselben Stelle befindet, lässt sich so aufgrund des Abstands zwischen dem schrägen Messpunkt an dem Flugzeugrumpf und der Distanzmesseinrichtung einen Abstand des Flugzeugrumpfs von der Bodenebene bestimmen.

Die Geometrie des Flugzeugrumpfs kann dazu führen, dass bei einem abnehmenden Abstand des Flugzeugrumpfs von der Bodenebene der Abstand des Flugzeugrumpfs von der schräg angeordneten Distanzmesseinrichtung auch zunimmt. Aufgrund der hinterlegten Geometrie in der Steuereinrichtung, des festgelegten Winkels α und der grundsätzlich gleichbleibenden horizontalen Ausrichtung der Flugzeugtreppe an einem bestimmten Flugzeugtyp, kann auch bei einem zunehmenden Abstand zwischen Distanzmesseinrichtung und Rumpf ein abnehmender Abstand zwischen Flugzeugrumpf und Distanzmesseinrichtung bestimmbar sein.

Es kann daher vorteilhaft sein, insbesondere bei einer Distanzmessung unter einem Winkel α ungleich 90° der Steuereinrichtung mitzuteilen, an welchen Flugzeugtyp die Flugzeugtreppe angestellt ist. Grundsätzlich kann auch an der Flugzeugtreppe eine Vorrichtung vorgesehen sein, welche die äußere Form beziehungsweise Geometrie des Flugzeugs analysiert und basierend auf der Analyse eine Umrechnung ermöglicht, wie die Veränderung der gemessenen Distanz zwischen Flugzeugrumpf und Distanzmesseinrichtung sich in einer tatsächlichen Höhenveränderung des Flugzeugrumpfs gegenüber einer Bodenebene ausdrückt.

Der Steuereinrichtung kann der Befehl erteilt werden, eine Höhe der Treppe, insbesondere der Plattform an eine Höhe des Flugzeugrumpfs, insbesondere der Ausstiegsluke, anzupassen. Hierdurch kann eine initiale Ausrichtung der Flugzeugtreppe an das Niveau des Flugzeugs erfolgen.

Weiterhin kann der Steuereinrichtung der Befehl erteilt werden, eine Änderung der Höhe der Treppe insbesondere der Plattform an eine Änderung der Höhe des Flugzeugrumpfs, insbesondere der Ausstiegsluke, anzupassen. Diese Anpassung kann gleichförmig oder inkrementell erfolgen.

Weitere zweckmäßige und vorteilhafte Ausgestaltungen der Erfindung gehen aus den Unteransprüchen hervor.

Die Distanzmesseinrichtung kann beispielsweise auf einer Laufzeitmessung eines akustischen oder optischen Signals beruht. Die Distanzmesseinrichtung kann beispielsweise einen Laser-, Ultraschall- oder Infrarotmesseinrichtung aufweisen, welche vorzugsweise mit einem entsprechenden Sender und Empfänger sowie bevorzugt den notwendigen Einrichtungen zur Laufzeitmessung ausgestattet ist.

Die Distanzmesseinrichtung kann in einem unteren, bodennahen Bereich der Flugzeugtreppe angeordnet ist. Die Distanzmesseinrichtung kann beispielsweise direkt über einem Rad der Flugzeugtreppe oder einem unteren Rahmenbereich der Flugzeugtreppe, welcher die Kanzel und die Treppe trägt, angeordnet sein. Vorzugsweise ist dabei der Abstand der Distanzmesseinrichtung von der Bodenebene bekannt beziehungsweise in der Steuereinrichtung hinterlegt.

Zweckmäßigerweise kann Distanzmesseinrichtung auf derselben Seite an der Flugzeugtreppe angeordnet sein wie die Plattform.

Die Distanzmesseinrichtung kann an einer Verlängerung befestigt sein, welche im angestellten Zustand unter den Flugzeugrumpf ragt, sodass eine Messung zwischen Distanzmesseinrichtung und einer Unterseite des Flugzeugrumpfs, vorzugsweise dem tiefsten Punkt des Flugzeugrumpfs im Bereich der Flugzeugtreppe, ermöglicht ist.

Bei der Verlängerung kann es sich um ein längliches oder flächiges Element, insbesondere eine Stange oder eine Platte handeln, auf welcher die Distanzmesseinrichtung angeordnet sein kann. Vorzugsweise ist die Distanzmesseinrichtung an einem vorderen Ende der Verlängerung angeordnet und einem unteren Bereich des Flugzeugrumpfs, vorzugsweise einem Scheitelpunkt der gewölbten Flugzeugrumpfunterseite lotrechte zustellbar. Eine sinnvolle Messung, insbesondere zur Änderung der Distanz des Flugzeugrumpfs von einer Bodenebene, ist jedoch grundsätzlich auch dann ermöglicht, wenn nicht der Scheitelpunkt selbst, sondern ein anderer Bereich der Unterseite des Flugzeugrumpfs durch die Distanzmesseinrichtung an der Verlängerung vermessen wird.

Eine Messrichtung der Distanzmesseinrichtung kann senkrecht zum Flugzeugrumpf ausgerichtet sein.

Diese senkrechte beziehungsweise lotrechte Ausrichtung der Distanzmesseinrichtung zum Flugzeugrumpf ermöglicht eine Bestimmung des Abstands des Flugzeugrumpfs von einer Bodenebene beziehungsweise eine Veränderung des Abstands in besonders einfacher Weise.

Eine Messrichtung der Distanzmesseinrichtung kann mit der Bodenebene einen Winkel kleiner 90° in Richtung des Flugzeugrumpf einschließen, wobei die Höhe oder die Veränderung der Höhe unter Berücksichtigung des Winkels bestimmbar ist. Einer Messung des Abstands mit einem Winkel kleiner 90° kann die Distanzmesseinrichtung direkt an der Flugzeugtreppe oder an der Verlängerung vorgesehen sein. Bei einer Messung mit einem Winkel kleiner 90° kann es vorteilhaft sein, den Winkel zu kennen, welcher die Messeinrichtung mit der Bodenebene einschließt und die äußere Kontur des Flugzeugs in der Steuereinrichtung hinterlegt ist, wodurch sowohl eine absolute Höhenbestimmung des Scheitelpunktes Rumpfes bestimmbar ist, obwohl nicht zwingend am Scheitelpunkt gemessen wird, als auch eine Veränderung der Höhe des Flugzeugrumpfs gegenüber der Bodenebene.

Die Verstelleinrichtung kann hydraulisch, pneumatisch oder mechanisch ausgebildet sein.

Zweckmäßigerweise kann es vorgesehen sein, dass die Verlängerung aus- und einfahrbar ist. Hierdurch kann eine Anpassung der Ausfahrlänge der Verlängerung an den jeweiligen Flugzeugtyp erfolgen. Beispielsweise kann durch Eingabe des Flugzeugtyps in der Steuereinrichtung automatisch eine Veränderung der ausgefahrenen Länge der Verlängerung erfolgen, sodass beispielsweise die Distanzmesseinrichtung bevorzugt im Scheitelpunkt des Flugzeugrumpfs angeordnet ist.

Da die Flugzeugtreppe selbst durch den unmittelbar bevorstehenden Kontakt mit dem Flugzeugrumpf im Bereich der Luke fest ausgerichtet ist, kann für jeden Flugzeugtyp eine Länge der Verlängerung hinterlegt werden, um welche die Verlängerung ausgefahren werden muss, sodass die Distanzmesseinrichtung an der Verlängerung sich vorzugsweise unmittelbar in der lotrechten unterhalb des Scheitelpunktes des Flugzeugrumpfs befindet. Dabei ist festzustellen, dass nicht unbedingt eine Erfassung des Abstands am Scheitelpunkt erfolgen muss sondern auch ein Länge der Verlängerung in der Steuereinrichtung hinterlegt sein kann, welche lediglich die Verlängerung mit der Distanzmesseinrichtung in einen Bereich unterhalb des Flugzeugrumpfs bewegt ohne dabei bis zum Scheitelpunkt des Flugzeugrumpfs vorzudringen. Auch in einem solchen Bereich ist eine sinnvolle Messung möglich, wie bereits voranstehend ausgeführt wurde.

Ist die gewünschte Position der Verlängerung inklusive Distanzmesseinrichtung unterhalb des Flugzeugrumpfs erreicht, kann es zweckmäßig sein, dass die Verlängerung in einer gewünschten Position für eine Messung festlegbar ist. Dadurch könnte einer nachteiligen Veränderung der Position der Verlängerung während der Messung vorgebeugt werden.

Eine zweite Distanzmesseinrichtung kann vorgesehen werden, welche vorzugsweise im Bereich der Plattform vorgesehen ist und welche einen Abstand der Plattform von der Bodenebene bestimmt/misst.

Grundsätzlich kann die Steuerung der Flugzeugtreppe ausgebildet sein, aufgrund einer Stellung der Mittel zur Höhenanpassung der Flugzeugtreppe eine Höhe der Plattform zu bestimmen (wie weit z.B. ein Stellzylinder ausgefahren ist oder anhand der Umdrehungen einer Höhenverstellbaren Spindel). Es kann jedoch von Vorteil sein, die voranstehend genannten Maßnahme zu ergreifen, da es bei der Bestimmung der Höhe der Plattform basierend auf der Stellung der Mittel zur Höhenverstellung auch zu unerwünschten Abweichungen kommen kann. So kann eine exakte Bestimmung der jeweiligen Lage/Höhe der Plattform zu jedem Zeitpunkt gewährleistet sein.

Basierend auf einer bestimmten Veränderung oder einer Absolut Messung der Höhe des Flugzeugrumpfs gegenüber der Distanzmesseinrichtung oder der Bodenebene kann die Höhe der Plattform gegenüber der Bodenebene um denselben oder einen ähnlichen Höhenbetrag anpassbar sein. Dieser Vorgang kann inkrementell oder stufenlos, insbesondere automatisch erfolgen. Dabei kann die zweite Distanzmesseinrichtung ausgebildet sein, die Höhe der Plattform gegenüber einer Bodenebene zu bestimmen. Die Regelung der Steuereinrichtung kann ausgebildet sein, eine Differenz zwischen den Distanzen der einzelnen Distanzmesser Einrichtungen beziehungsweise eine Veränderung der Distanz, die durch die erste Messeinrichtung mit oder ohne Unterstützung der Regel oder Steuereinrichtung festgestellt wurde, in eine Veränderung der Höhe der Plattform umzusetzen. Dabei kann eine Änderung der Höhe der Plattform so lange erfolgen, beispielsweise mittels der Regeleinrichtung beziehungsweise Steuereinrichtung, bis die zweite Distanzmesseinrichtung dieselbe oder eine ähnliche Höhenveränderung der Plattform feststellt, wie durch die erste Messeinrichtung zwischen Boden und Flugzeugrumpf bestimmt wurde.

Dies kann ein kontinuierlicher Prozess sein mit einer ständigen Anpassung der Höhe der Plattform an die Veränderung der Höhe des Flugzeugrumpfs gegenüber dem Boden oder der Distanzmesseinrichtung. Vorzugsweise werden dabei Höhendifferenzen durch die erste und zweite Distanzmesseinrichtung gemessen oder bestimmt beziehungsweise durch die entsprechende Steuer- und/oder Regeleinrichtung bestimmt beziehungsweise in eine Verlagerung der Plattform umgesetzt.

Eine initiale Höheneinstellung der Plattform der Flugzeugtreppe gegenüber einer Einstiegsluke kann beispielsweise händisch erfolgen. Hierbei kann es vorteilhaft sein, dass eine berührungslose jedoch sichtbare Markierung, wie beispielsweise eine Lasermarkierung ausgehend von einem Bereich der Flugzeugtreppe, vorzugsweise der Plattform, die Ausrichtung der Plattform gegenüber der Flugzeugluke an der Flugzeugluke beziehungsweise im Bereich der Flugzeugluke markieren kann. Dabei kann sowohl eine vertikale also eine horizontale Ausrichtung der Flugzeugtreppe durch eine beispielsweise lineare Lasermarkierung oder andere sichtbare, berührungslose (lineare) Markierung bereitgestellt sein, welche vorzugsweise in einem unteren Bereich der Luke beziehungsweise im seitlichen Bereich der Luke, vorzugsweise bündig mit dieser, darstellbar ist, vorzugsweise wenn die Plattform gegenüber der Einstiegsluke optimal ausgerichtet ist. Die Höheneinstellung kann anschließend durch entsprechende Betätigung eines Einstellmittels, wie einem Hebel oder einem Knopf zur Betätigung mechanischer Einstellmittel erfolgen.

Soweit es sich bei den Mitteln zum Anzeigen einer Ausrichtung der Flugzeugtreppe an dem Flugzeug um eine Projektion, wie beispielsweise eines Laserstrahl handelt, kann diese in Abhängigkeit von einer Distanz der Flugzeugtreppe zum Flugzeug beim Annähern der Flugzeugtreppe an das Flugzeug Anschaltbar sein. Eine vertikale Markierung kann insbesondere eine seitliche Ausrichtung der Flugzeugtreppe gegenüber dem Flugzeug unterstützen. Eine horizontale Markierung kann insbesondere eine Ausrichtung der Flugzeuge gegenüber dem Flugzeug der Höhe nach unterstützen.

Bei den Mitteln zur Höheneinstellung kann es sich beispielsweise um eine hydraulische Einrichtung oder um eine Spindel handeln, mittels welcher eine Höhe der Flugzeugtreppe vorzugsweise stufenlos einstellbar und veränderbar ist.

Die Kanzel wird mit der Treppe gemeinsam gegenüber dem Rahmen der Flugzeugtreppe horizontal verlagert.

Die Stufen der Flugzeugtreppen können auch als Rolltreppe ausgebildet sein.

Die Treppe vollzieht gemeinsam der Kanzel gegenüber einem Rahmen die horizontale Verschiebungsbewegung der Kanzel.

Dabei kann die Treppe sowohl lose auf dem Rahmen aufliegen, auf dieser geführt sein oder mit dieser fest verbunden sein. Besonders bevorzugt ist die Treppe gegenüber dem Rahmen beweglich gelagert. Dafür kann diese auf einer Führung, beispielsweise einer Schlittenführung im Bereich des/am Rahmen(s), angeordnet und gegenüber diesem horizontal verschieblich gelagert. Die Führung kann auch direkt am Rahmen angeordnet sein und einen gegenüber dem Rahmen beweglichen Teil aufweisen, an welchem bevorzugt die Treppe beziehungsweise dessen Träger angeordnet sein können. Grundsätzlich kann der Rahmen auch zumindest 2-teilig ausgebildet sein, mit einem ersten statischen Teil und einem zweiten beweglichen Teil, welcher die vorangehend beschriebenen Führung ersetzen könnte, beziehungsweise an welchem die Treppe horizontal verschiebbar gegenüber dem ersten statischen Teil beweglich gelagert sein kann. Diese sind äquivalente Mittel zur Erreichung desselben Ziels gegenüber der zuvor beschriebenen Führung beziehungsweise Schlittenführung.

Hierbei können die Stufen der Treppe beidseitig an jeweils 2 Trägern befestigt sein, welche bevorzugt parallel zueinander ausgerichtet und/oder an/zu beiden Seiten der Treppenstufen (links/rechts) angeordnet sind. Besonders bevorzugt sind die Träger in einem oberen Bereich an der Kanzel und/oder in einem unteren Bereich an der Führung der Treppe gelenkig gelagert, wodurch die Treppe beziehungsweise die Träger einen veränderlichen Winkel gegenüber der Kanzel und/oder gegenüber der Führung im Bereich des Rahmens / an dem Rahmen einnehmen können. Bevorzugt bilden die Träger jeder Seite der Treppe ein Parallelogramm insbesondere unabhängig von der jeweiligen Höhe der Kanzel beziehungsweise dem Winkel den die Träger mit dem Rahmen der Flugzeugtreppe und/oder der Kanzel einschließen.

Dadurch ist eine stets horizontale Ausrichtung der Treppenstufen auch bei sich änderndem Abstand der Treppenstufen zueinander - beispielweise durch eine Veränderung des Winkels zwischen den Trägern, beziehungsweise der Treppe, und der besagten Führung/Rahmen/Kanzel - ermöglicht.

Der mindestens eine Stellzylinder, welcher eine Höhenveränderung der Kanzel gegenüber dem Rahmen ermöglicht, kann gegenüber dem Rahmen und/oder gegenüber der Kanzel ebenfalls gelenkig gelagert sein. Dieser kann dadurch die Bewegung der Führung der Treppe, beziehungsweise der Führung der Träger der Stufen, in Form einer Rotationsbewegung gegenüber dem Rahmen beziehungsweise gegenüber seiner Aufnahme an dem Rahmen/an der Flugzeugtreppe nachvollziehen, was einer freien horizontalen Bewegung der Kanzel inklusive Treppe zuträglich sein kann.

Bei beigleichbleibender Höhe der Kanzel ist die horizontale Verstellung ermöglicht. Die üblicherweise konvexe Außenkontur des Flugzeugrumpfs kann bei dieser Höhenverstellung zu einer Veränderung der horizontalen Position beziehungsweise des horizontalen Abstands gegenüber der Kanzel einer Flugzeugtreppe führen.

Die Führung, insbesondere Schlittenführung, der Treppe, insbesondere der Träger der Stufen, kann als Teil oder Erweiterung des Rahmens ausgebildet sein, beziehungsweise an diesem befestigt sein. Die Führung kann eine Aufnahme aufweisen, an welcher die Träger beziehungsweise die Treppe gelenkig gegenüber der Führung aufgenommen sind/ist. Die Führung kann auch mehrteilig ausgebildet sein, wobei jeweils ein Teil der Führung der rechten beziehungsweise linken Seite der Treppe zugeordnet sein kann und/oder den Trägern der Treppenstufen zur linken beziehungsweise zur rechten Seite zugeordnet/angeordnet sind.

Die Ausgestaltung der Führung an sich, ist grundsätzlich von untergeordneter Rolle und kann auch beispielsweise über ein Gleit-, Hydraulik- oder Zahnradsystem bereitgestellt werden. Wesentlich bei der Führung kann es jedoch sein, dass eine Verlagerung der Treppe beziehungsweise der Träger der Treppenstufen gegenüber dem Rahmen, insbesondere gegenüber dem Gelenkpunkt des/der Höhenverstellungszylinder(s) der Kanzel am Rahmen bewirkbar ist. Es soll demnach eine horizontale Beweglichkeit gegenüber einem statischen Bereich der Flugzeugtreppe bereitgestellt werden. Hierdurch kann auch bei ausgefahrenen Stellzylindern, zur Arretierung der Flugzeugtreppe, eine Verlagerung der Kanzel in horizontaler Weise gegenüber dem Rahmen beziehungsweise den Stellzylindern und somit gegenüber einem Flugzeugrumpf bewirkbar sein.

Besonders bevorzugt sind die Treppenstufen an der Treppe, beziehungsweise an den Trägern der Treppenstufen, ebenfalls gelenkig aufgenommen. Dadurch können die Treppenstufen eine Veränderung des Winkels zwischen den Trägern der Treppenstufe und der Führung beziehungsweise dem Rahmen und/oder der Kanzel nachvollziehen/übersetzen. Dies kann einer stets horizontalen Ausrichtung der Treppenstufen zuträglich sein.

Es kann vorzugsweise vorgesehen sein, dass die Mittel zur Höhenverstellung, insbesondere ein Verstellzylinder, eine Verstellschraube oder hydraulische Mittel zur Höhenverstellung sind. Diese können gegenüber dem zumindest einen Teil des Rahmens neigbar angeordnet sein, um eine horizontale Verlagerung der Kanzel gegenüber dem Rahmen, insbesondere bei einem am Rahmen beweglich gelagerten Treppenaufgang mit diesem gemeinsam zu ermöglichen.

Ebenfalls kann es vorgesehen sein, dass einzelne Bereiche des Rahmens während der horizontalen Veränderung der Kanzel mit dieser die horizontale Bewegung vollziehen, also gegenüber dem mindestens einem statischen Teil des Rahmens oder an diesem beweglich gelagert sind. Die Verlagerung der Treppe gegenüber zumindest einem Teil des Rahmens (feststehender Teil des Rahmens) und die Verlagerung mindestens eines zweiten Teils des Rahmens gegenüber dem feststehenden Teil des Rahmens können auch beide gleichzeitig für eine Horizontalverschiebung der Kanzel gegenüber einem Flugzeugrumpf vorgesehen sein. Hierdurch kann insbesondere auch eine horizontale Verstellung entkoppelt von, also ohne eine Vertikalverstellung erfolgen. Der feststehende Teil des Rahmens kann beispielsweise aufstützen oder festgestellten Rädern ruhen.

Die Kanzel ist mit der Treppe gegenüber zumindest einem Teil des Rahmens verschieblich gelagert.

Bevorzugt ist eine Sensoreinrichtung vorgesehen, welche ausgebildet ist, den horizontalen Abstand der Flugzeugtreppe im Bereich der Kanzel zu einem Objekt zu messen und
eine Steuereinrichtung, welche ausgebildet ist, die Verstelleinrichtung, soweit mindestens ein messbarer, voreinstellbarer Abstand der Kanzel zu dem Objekt überschritten oder unterschritten ist, für eine Verschiebung der Kanzel anzusteuern.

Der messbare Abstand kann insbesondere ein Abstand sein, der mittels der Sensoreinrichtung erfasst wird und repräsentativ für den Abstand der Kanzel zu dem Flugzeugrumpf, vorzugsweise in einer horizontalen Ausrichtung in Höhe der Kanzel steht.

Der mindesten einen voreinstellbaren Abstand kann insbesondere ein hinterlegter Abstand sein, wobei es sich bei diesem um einen Mindest- und/oder einen Höchstabstand handeln kann, den die Kanzel zu dem Flugzeugrumpf einnehmen soll.

Bei Überschreiten beziehungsweise Unterschreiten kann die Steuereinrichtung mit der Sensoreinrichtung verbunden sein, die Verletzung des Grenzwerts festzustellen und die Verstelleinrichtung so anzusteuern, dass ein voreingestellter Abstand, vorzugsweise ein bevorzugter Abstand wiederhergestellt ist.

Besonders bevorzugt ist die Steuereinrichtung ausgebildet, die Verstelleinrichtung so anzusteuern, dass ein konstanter Abstand zwischen Flugzeugrumpf und Kanzel horizontal gehalten ist. Dabei kann es sich insbesondere um eine kontinuierliche Anpassung der horizontalen Ausrichtung der Kanzel gegenüber zumindest einem Teil des Rahmens der Flugzeugtreppe handeln, um einen vordefinierten Abstand zwischen Flugzeugrumpf und Kanzel aufrechtzuerhalten.

Besonders bevorzugt ist es vorgesehen, dass der Rahmen, bzw. zumindest ein Teil des Rahmens, der Flugzeugtreppe ortsfest gegenüber einer Bodenebene vorgesehen ist, auf welche die Flugzeugtreppe steht, insbesondere während einer Verschiebung der Kanzel. Die horizontale Anpassung der Kanzel soll erfindungsgemäß gerade nicht durch eine Veränderung der Position der Flugzeugtreppe an sich gegenüber dem Flugzeug oder einem Boden, auf welchem die Flugzeugtreppe angeordnet ist, erfolgen. Davon ausgenommen kann das horizontale verändern einzelner Rahmenbestandteile gegenüber einem Fixpunkt an der Flugzeugtreppe sein, wobei der Fixpunkt der zumindest eine Teil des Flugzeugtreppenrahmens sein kann. Vorzugsweise kann der Flugzeugtreppenrahmen mehrteilig ausgebildet sein, wobei einzelne Teile, zumindest ein Teil des Flugzeugsrahmens ortsfest vorgesehen ist und weitere Teile, zumindest ein weiteres Teil, gegenüber dem ersten Teil beweglich gelagert sein können. Dies kann beispielsweise nach dem Ziehharmonikaprinzip erfolgen. Besonders bevorzugt ist es vorgesehen, dass die Kanzel mit den Treppenstufen gekoppelt/verbunden ist. Dabei kann der Treppenaufgang, also die Stufen die horizontale Bewegung der Kanzeln nachvollziehen oder begleiten beziehungsweise andersherum.

Erfindungsgemäß ist es vorgesehen, dass die Verstelleinrichtung die Kanzel zumindest gegenüber einem Teil des Rahmens horizontal verschiebt.

Vorzugsweise wird dabei ein Abstand eines Objekts zu der Kanzel der Flugzeugtreppe gemessen und die Verstelleinrichtung angesteuert, die Flugzeugtreppe gegenüber dem Objekt in seinem Abstand anzupassen, währen der Rahmen gegenüber einem darunter befindlichen Boden stillsteht.

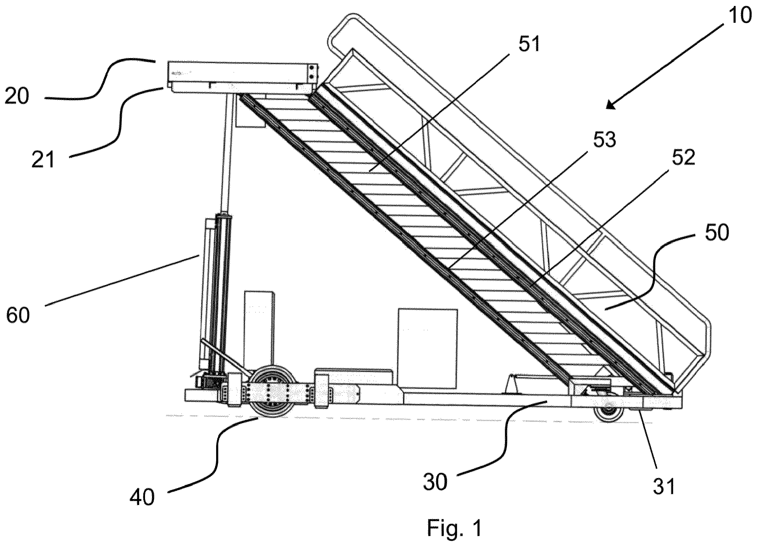

Figur 1 zeigt eine Flugzeugtreppe 10 mit einer Kanzel 20 und einem Rahmen 30. Der Rahmen 30 steht auf dem Boden 40 und kann durch festgestellte Räder oder ausgefahrene Stützten ortsfest bzw. unbeweglich auf dem Boden 40 vorgesehen sein. Der

Treppenaufgang 50 führt zu der Kanzel 20 und ist am Rahmen beweglich gelagert.

Hierfür kann eine Führung 31, insbesondere eine Schlittenführung vorgesehen sein, mittels welcher der Treppenaufgang 50 gegenüber dem Rahmen 30 horizontal beweglich gelagert ist. Die Führung 31 kann beispielsweise mittels eines Hydraulikzylinders, welcher an/mit seinem einen Ende an der Führung und an/mit seinem anderen Ende am Rahmen 30 verbunden ist, gegenüber dem Rahmen 30 verlagerbar sein. Dadurch kann die Treppe 50 gegenüber dem Rahmen 30 horizontal veränderlich lagerbar sein. Die Treppe kann beispielsweise als Aufnahme für die Treppenstufen 51 Träger 52, 53 aufweisen, an welchen die Treppenstufen 51 gelenkig gelagert sein können.

Die Träger 52, 53 können wiederum gegenüber und/oder an der Führung 31 gelenkig gelagert sein. Auch gegenüber der Kanzel 20 können die Träger 52, 53 gelenkig gelagert sein. Die Träger können auch als vorderer Träger 52 und hintere Träger 53 bezeichnet werden und sind bevorzugt jeweils (paarweise) zur rechten und linken Seite der Treppenstufen angeordnet. Die demnach bevorzugt 4 Träger 52, 53, beziehungsweise die zur linken und rechten Seite der Treppenstufen angeordneten Träger 52,53 fassen die Treppenstufen 51 bevorzugt seitlich ein.

Besonders bevorzugt sind die Treppenstufen gegenüber den/an den Trägern 52, 53 gelenkig gelagert, wodurch eine Neigungsveränderung der Treppe 50, beziehungsweise der Träger 52, 53, gegenüber dem Rahmen 30 beziehungsweise der Führung 31 dennoch weiterhin eine horizontale Ausrichtung der Treppenstufen 51 ermöglicht. Eine Veränderung des Winkels der Träger 52, 53 gegenüber der Führung 31 beziehungsweise gegenüber dem Rahmen 30 kann zu einer Abstandsveränderung zwischen den Treppenstufen, zumindest der Höhe nach, führen.

Es kann anstelle des Stellzylinders 60 eine beliebige Einrichtung vorgesehen sein, welche die Kanzel 20 mit der Basis der Flugzeugtreppe, insbesondere dem Rahmen 30 Höhen-veränderlich verbindet. Der mindestens eine Stellzylinder 60 kann dazu bereitgestellt sein, die Treppe der Höhe nach gegenüber dem Rahmen zu verändern, oder eine Höhenveränderung der Kanzel 20, welche durch eine horizontale Verlagerung Führung 31/der Träger 52, 53 gegenüber dem Rahmen 30 bewirkbar sein kann, zu kompensieren.

Besonders bevorzugt ist der mindestens eine Stellzylinder beziehungsweise die Einrichtung 60 zur Anpassung der Höhe der Kanzel 20 gegenüber dem Rahmen 30 (Stellzylinder 60) sowohl gegenüber dem Rahmen 30, also in einem Bereich der Basis der Flugzeugtreppe 10, als auch im Bereich der Kanzel, beziehungsweise gegenüber der Kanzel, gelenkig gelagert. Hierdurch ist eine Veränderung der horizontalen Ausrichtung der Kanzel gemeinsam mit der Treppe ermöglicht, ohne dass die Verbindung des Stellzylinders mit dem Rahmen und/oder der Kanzel dieser horizontalen Verlagerung der Treppe 50 beziehungsweise der Kanzel 20 entgegenstünde. Besonders bevorzugt ist die Kanzel durch eine gleichzeitige Betätigung des mindestens einen Stellzylinders 60 und Verlagerung der Führung 31 gegenüber dem Rahmen 30 bei gleichbleibender Höhe der Kanzel 20 gemeinsam mit der Treppe 50 horizontal verlagerbar. Das Verlagern der Führung 31 kann eine Höhenveränderung der Kanzel 20 bewirken, welche durch den Stellzylinder 60 kompensierbar sein kann, wodurch de facto bei gleichbleibender Höhe der Kanzel eine horizontale Verschiebung der Kanzel gemeinsam mit dem Treppenaufgang bewirkbar ist.

Dies kann insbesondere im Hinblick auf die Gefahr einer möglichen Verletzung von Passagieren bei der Benutzung der Flugzeugtreppe entgegenwirken, da die von den Passagieren benutzten Bereiche der Flugzeugtreppe bevorzugt keine Relativbewegung zueinander vollziehen.

Der Stellzylinder 60 kann grundsätzlich jedes Mittel sein, welches geeignet ist, eine Höhenanpassung der Kanzel gegenüber der Basis der Flugzeugtreppe beziehungsweise dem Rahmen 30 zu bewirken. Eine gelenkige Verbindung mit dem Rahmen 30 beziehungsweise Kanzel 20 ist unabhängig vom alternativen Mittel zum Stellzylinder 60 bevorzugt.

An der Kanzel kann eine Sensoreinrichtung 21 vorgesehen sein, welche einen horizontalen Abstand der Kanzel zu einem Objekt auf dessen Höhe, z.B. einem Flugzeugrumpf bestimmt.

## Patentansprüche

1. Flugzeugtreppe (10) mit
- einer Kanzel (20),
- einem Treppenaufgang (50), mit
- Stufen (51), die von einer Bodenebene (40) zu der Kanzel (20) führen;
- einem Rahmen (30), welcher die Kanzel trägt und
- Verbindungsmittel zwischen dem Rahmen und der Kanzel, welche die Kanzel in einer einstellbaren Höhe halten
**dadurch gekennzeichnet,**
**dass** eine Verstelleinrichtung vorgesehen ist, mittels welcher die Kanzel als Ganzes (20) gegenüber zumindest einem Teil des Rahmens (30) bei gleichbleibender Höhe der Kanzel (20) gemeinsam mit dem Treppenaufgang (50) horizontal verschiebbar gelagert ist.

2. Flugzeugtreppe nach Anspruch 1
**gekennzeichnet durch**,
eine Sensoreinrichtung (21), welche ausgebildet ist, den horizontalen Abstand der Flugzeugtreppe (10) im Bereich der Kanzel (10) zu einem Objekt zu messen und
eine Steuereinrichtung, mittels welcher die Verstelleinrichtung, soweit mindestens ein messbarer, voreinstellbarer Abstand der Kanzel zu dem Objekt überschritten oder unterschritten ist, für eine Verschiebung der Kanzel ansteuerbar ist.

3. Flugzeugtreppe nach Anspruch 1 oder 2,
**dadurch gekennzeichnet,**
**dass** der Rahmen (30) der Flugzeugtreppe (10) ortsfest gegenüber einer Bodenebene (40) vorgesehen ist, insbesondere während einer Verschiebung der Kanzel (20).

4. Flugzeugtreppe nach einem der Ansprüche 1 bis 3,
**dadurch gekennzeichnet,**
**dass** die Kanzel (20) mit den Treppenstufen (50) gekoppelt sind.

5. Verfahren zum horizontalen Verstellen einer Kanzel einer Flugzeugtreppe nach einem der Ansprüche 1 bis 4,
**dadurch gekennzeichnet,**
**dass** die Verstelleinrichtung die Kanzel (20) zumindest gegenüber einem Teil des Rahmens (30) gemeinsam mit dem Treppenaufgang (50) horizontal verschiebt.

6. Verfahren nach Anspruch 5,
**dadurch gekennzeichnet,**
**dass** die Stufen (51) der Treppe (10) mit der Kanzel horizontal gegenüber dem Rahmen (30) bewegt werden.

7. Verfahren nach Anspruch 5
**dadurch gekennzeichnet,**
**dass** ein Abstand eines Objekts zu der Kanzel (20) der Flugzeugtreppe gemessen wird und die Verstelleinrichtung angesteuert wird, die Flugzeugtreppe (10) gegenüber dem Objekt in seinem Abstand anzupassen, währen der Rahmen (30) gegenüber einem darunter befindlichen Boden (40) stillsteht.

## Claims

1. Airplane stairs (10) with
- a pulpit (20),
- a staircase (50), with
- steps (51) leading from a floor level (40) to the pulpit (20);
- a frame (30) which supports the pulpit and
- Connecting means between the frame and the pulpit, which keep the pulpit at an adjustable height
**characterized in,**
**that** an adjusting device is provided, by means of which the pulpit as a whole (20) is mounted horizontally displaceably relative to at least part of the frame (30) while the height of the pulpit (20) remains the same, together with the staircase (50).

2. Aircraft stairs according to claim 1
**characterized in,**
**that** a sensor device (21) which is designed to measure the horizontal distance from the aircraft stairs (10) in the area of the cockpit (10) to an object and
a control device, by means of which the adjusting device can be controlled for a displacement of the pulpit if at least one measurable, presettable distance of the pulpit from the object is exceeded or not reached.

3. Aircraft stairs according to claim 1 or 2,
**characterized in,**
**that** the frame (30) of the aircraft stairs (10) is provided in a stationary manner relative to a floor plane (40), in particular during a displacement of the cockpit (20).

4. Aircraft stairs according to one of claims 1 to 3,
**characterized in,**
**that** the pulpit (20) is coupled to the steps (50).

5. Method for horizontal adjustment of a cockpit of an aircraft staircase ac cording to one of claims 1 to 4,
**characterized in,**
**that** the adjusting device displaces the pulpit (20) horizontally together with the staircase (50) at least in relation to a part of the frame (30).

6. Method according to claim 5,
**characterized in,**
**that** the steps (51) of the staircase (10) are moved horizontally with the pulpit with respect to the frame (30).

7. Method according to claim 5
**characterized in,**
**that** a distance between an object and the cockpit (20) of the aircraft stairs is measured and the adjusting device is controlled to adjust the aircraft stairs (10) in relation to the object in terms of its distance, while the frame (30) is stationary in relation to a floor (40) located underneath.

## Revendications

1. Escalier d'avion (10) avec
- une chaire (20),
- un escalier (50), avec
- des marches (51) menant du plain-pied (40) vers la chaire (20);
- un cadre (30) portant la chaire et
- un moyen de liaison entre le cadre et la chaire maintenant la chaire à une hauteur réglable est
caractérisé de sorte
qu'un dispositif de réglage est prévu par le biais duquel la chaire est montable au minimum à titre déplaçable et horizontal dans son ensemble (20) en face d'une partie du cadre (30) à une hauteur constante de la chaire (20) en complicité avec l'escalier (50).

2. Escalier de l'avion selon la revendication 1 est
caractérisé de sorte
que le dispositif capteur (21) est formé de sorte que la distance horizontale de l'escalier de l'avion (10) est mesurable à un objet au niveau de la chaire (10) et que le dispositif de commande est pilotable pour le déplacement de la chaire par le biais du dispositif de réglage, dans la mesure où au minimum une distance mesurable préréglable de la chaire à l'objet est dépassée ou le cas échéant est inférieure.

3. Escalier de l'avion selon la revendication 1 ou 2 est
caractérisé de sorte
que le cadre (30) de l'escalier de l'avion (10) est prévu à titre stationnaire en face d'un plain-pied (40) en particulier lors du déplacement de la chaire (20).

4. Escalier de l'avion selon la revendication 1 jusqu'à 3 est
caractérisé de sorte
que la chaire (20) est couplée aux marches d'escalier (50).

5. Dispositif pour l'ajustement horizontale d'une chaire d'un escalier d'avion selon la revendication 1 jusqu'à 4 est
caractérisé de sorte
que le dispositif du réglage de la chaire (20) se déplace au minimum à titre horizontale en face d'une partie du cadre (30) en complicité avec l'escalier (50).

6. Dispositif selon la revendication 5 est
caractérisé de sorte
que les marches (51) de l'escalier (10) sont déplacées avec la chaire à titre horizontale en face du cadre (30).

7. Dispositif selon la revendication 5 est
caractérisé de sorte
que la distance d'un objet vers la chaire (20) de l'escalier de l'avion est mesurée et que le dispositif de réglage est piloté de sorte que l'escalier de l'avion (10) est adaptable en face de l'objet dans son espacement, tandis que le cadre (30) s'arrête en face d'un fond se trouvant en dessous.
